# EUROPEAN PATENT APPLICATION

(11) **EP 4 756 408 A1**
(43) Date of publication of application: **10.06.2026**
(21) Application number: 24848936.1
(22) Date of filing: 18.07.2024
(51) Int. Cl.: G01N 19/04, B26D 3/08, B26D 5/00, B26D 7/01, B26D 7/26, G01N 17/00

(54) **COATING FILM CUTTING APPARATUS**

(30) Priority: 28.07.2023 JP 2023123030
(71) Applicant: Allgood Co.,Ltd., Tokyo 107-0062 (JP)
(72) Inventor: MAEDA Hironobu, Tokyo 107-0062 (JP); MORIKAWA Motoaki, Kawasaki-shi, Kanagawa 210-0001 (JP)
(74) Representative: TBK
(86) International application number: PCT/JP2024/025745
(87) International publication number: WO 2025/028281

(57) **Abstract**

Provided is a coating film cutting apparatus capable of performing uniform cutting with high reproducibility and stability on a coating film. An apparatus that performs cutting processing on a test piece TP on which a coating film is formed includes a test piece holder 2 that holds the test piece TP, and a cutter unit 3 that performs the cutting processing on the test piece TP held by the test piece holder 2. The test piece holder 2 is provided on an apparatus base 20 so as to be movable in the X-axis, Y-axis, and θ-axis directions. The cutter unit 3 is attached to a second stage 73 suspended from a first stage 71 movable in the Z-axis direction via a load cell 72. In the cutting processing on the coating film, cutting is performed by moving the cutter unit 3 in the Z-axis direction, and cutting is performed at a desired depth, length, and direction by moving the test piece holder 2 holding the test piece TP in the X-axis, Y-axis, and θ-axis directions.

## Description

### Technical Field

The present invention relates to a coating film cutting apparatus, and more particularly to an apparatus that performs predetermined cutting processing or scratching processing on a test piece on which a coating film is formed on a base material.

### Background Art

Conventionally, various test methods have been proposed as tests for evaluating the mechanical properties of a coating film. For example, as a test for evaluating adhesion of a coating film, an adhesion cross-cut method (JIS-K5600-5-6), a grid method, a grid pattern tape method, an X-cut tape method (JIS-K5400 8.5.1), and the like are known. In addition, as a test for evaluating the long-term durability of a coating film, a cycle corrosion test method - salt water spray/drying/wetting (JIS-K5600-7-9), a salt water spray test method (JIS-Z2371), and the like are known.

In such a test for evaluating the mechanical properties of a coating film, a test is performed using a test piece in which a coating film is formed on a base material. The coating film of the test piece is cut with a cutter knife or the like before or during the test. For example, in the adhesion cross-cut method, as a preparation before the test, a perpendicular grid pattern (25 squares) is manually cut into the coating film of the test piece using a cutter knife (see, for example, Patent Literature 1). In the cycle corrosion test, a coating film of a test piece is manually cut using a cutter knife before the test, and then a corrosion cycle of spraying salt water, drying, and wetting is repeatedly executed.

### Citation List

### Patent Literature

Patent Literature 1: JP 2012-85725 A

### Summary of Invention

### Technical Problem

However, such a conventional method has the following problems.

That is, in this type of test, the depth of cutting of the cutter knife into the coating film, the cutting angle, the degree of biting into the base material, and the like greatly affect the test result. However, if cutting work is manually performed as in the prior art, reproducibility and stability of cutting are poor due to artificial bias, and it is difficult to uniformly cut the coating film. Therefore, there is a problem that a result of a test for evaluating mechanical properties of a coating film varies due to artificial bias.

The present invention has been made in view of such problems, and an object of the present invention is to provide a coating film cutting apparatus capable of performing uniform cutting with high reproducibility and stability on a coating film.

### Solution to Problem

In order to achieve the above object, a coating film cutting apparatus according to the present invention is an apparatus that performs predetermined cutting processing or scratching processing on a test piece having a coating film formed on a surface, the coating film cutting apparatus including a test piece holder that holds the test piece, and a tool unit including a tool that performs the predetermined cutting processing or scratching processing on the test piece held by the test piece holder, in which the test piece holder is provided movably in an X-axis direction, a Y-axis direction, and a θ-axis direction on an apparatus base, and in which the tool unit is detachably attached to a second stage suspended from a first stage provided movably in a Z-axis direction on the apparatus base via a load cell.

The present invention has the following features as a preferred embodiment thereof.
(1) The coating film cutting apparatus is characterized in that the apparatus base includes an X-axis drive mechanism that drives the test piece holder in the X-axis direction, a Y-axis drive mechanism that drives the test piece holder in the Y-axis direction, a θ-axis drive mechanism that drives the test piece holder to rotate about a θ-axis, a Z-axis drive mechanism that drives the first stage in the Z-axis direction, and control means that controls driving of these drive mechanisms.
(2) The coating film cutting apparatus is characterized in that the tool unit includes a cutter unit that holds a cutter knife blade for performing the predetermined cutting processing on the test piece.
(3) The coating film cutting apparatus is characterized in that the cutter unit includes a blade holding mechanism that detachably holds the cutter knife blade, a blade feeding mechanism that feeds the cutter knife blade held by the blade holding mechanism to a blade edge side, and a blade snapping mechanism that is provided on a distal end side of the blade feeding mechanism and snaps a distal end block of the cutter knife blade fed by the blade feeding mechanism along a snap line.
(4) The coating film cutting apparatus is characterized in that the blade feeding mechanism includes an electric motor, a ball screw drivingly coupled to the electric motor, and a slide member coupled to a nut portion of the ball screw, the slide member including a locking portion that engages with a through hole formed in the cutter knife blade.
(5) The coating film cutting apparatus is characterized in that the blade snapping mechanism includes a blade snapping block that sandwiches a distal end block of the cutter knife blade fed by the blade feeding mechanism and turns in conjunction with feeding of the cutter knife blade.
(6) The coating film cutting apparatus is characterized in that the tool unit includes a scratch unit that holds a needle-shaped tool or a pencil for performing predetermined scratching processing on the test piece.
(7) The coating film cutting apparatus is characterized in that the scratch unit includes a tool holding mechanism that holds the needle-shaped tool or the pencil, and a weight attachment mechanism that attaches a weight that applies a load to the tool holding mechanism.

### Advantageous Effects of Invention

According to the present invention, a test piece holder that holds a test piece having a coating film formed thereon is provided movably in an X-axis direction, a Y-axis direction, and a θ-axis direction on an apparatus base, and a tool unit that performs cutting processing and the like on the coating film is attached to a second stage suspended from a first stage provided movably in a Z-axis direction on the apparatus base via a load cell. Hence, the tool unit can perform cutting processing and the like on the coating film while measuring a load acting on the coating film, so that uniform cutting with high reproducibility and stability can be performed on a coating film. Therefore, by using the coating film cutting apparatus according to the present invention, a test for evaluating mechanical properties of a coating film can be accurately performed without variation.

### Brief Description of Drawings

Fig. 1 is a perspective view showing an example of an external configuration of a coating film cutting apparatus according to the present invention.
Fig. 2 is a perspective view showing an internal structure of the coating film cutting apparatus from which a casing is removed.
Fig. 3 is a plan view showing the internal structure of the coating film cutting apparatus from which the casing is removed.
Fig. 4 is a block diagram showing a functional configuration of drive mechanisms, a control unit thereof, and the like of the coating film cutting apparatus.
Fig. 5 is a perspective view showing an example of an external configuration of a test piece holder in the coating film cutting apparatus.
Fig. 6 is a perspective view showing an example of an external configuration of a cutter unit in the coating film cutting apparatus.
Fig. 7 is an exploded perspective view showing an example of an attachment structure of a cutter knife blade in a cutter unit of the coating film cutting apparatus.
Fig. 8 shows a holding state of the cutter knife blade in the cutter unit of the coating film cutting apparatus, in which Fig. 8 (a) shows a perspective view of a distal end portion of the cutter unit as viewed from above, Fig. 8 (b) shows a plan view of the distal end portion of the cutter unit, and Fig. 8 (c) shows a perspective view of the distal end portion of the cutter unit as viewed from below.
Fig. 9 shows a blade-folded state in which the cutter knife blade in the cutter unit of the coating film cutting apparatus is folded, in which Fig. 9(a) shows a perspective view of a distal end portion of the cutter unit as viewed from above, Fig. 9(b) shows a plan view of the distal end portion of the cutter unit, and Fig. 9(c) shows a perspective view of the distal end portion of the cutter unit as viewed from below.
Fig. 10 shows an example of an external configuration of a pencil hardness test unit of the coating film cutting apparatus, in which Fig. 10(a) shows a state in which a weight of the pencil hardness test unit is removed, and Fig. 10 (b) shows a state in which the weight is mounted on the pencil hardness test unit.

### Description of Embodiments

Hereinafter, embodiments of a coating film cutting apparatus according to the present invention will be described in detail with reference to the drawings. Note that in the present specification and the drawings, components having substantially the same functional configuration are denoted by the same reference numerals, and redundant description is omitted.

### First Embodiment

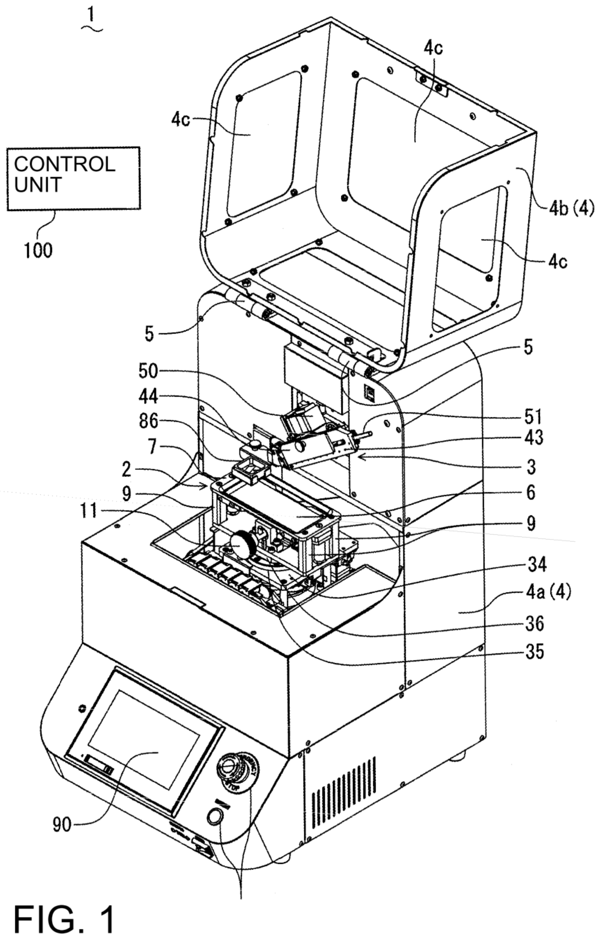

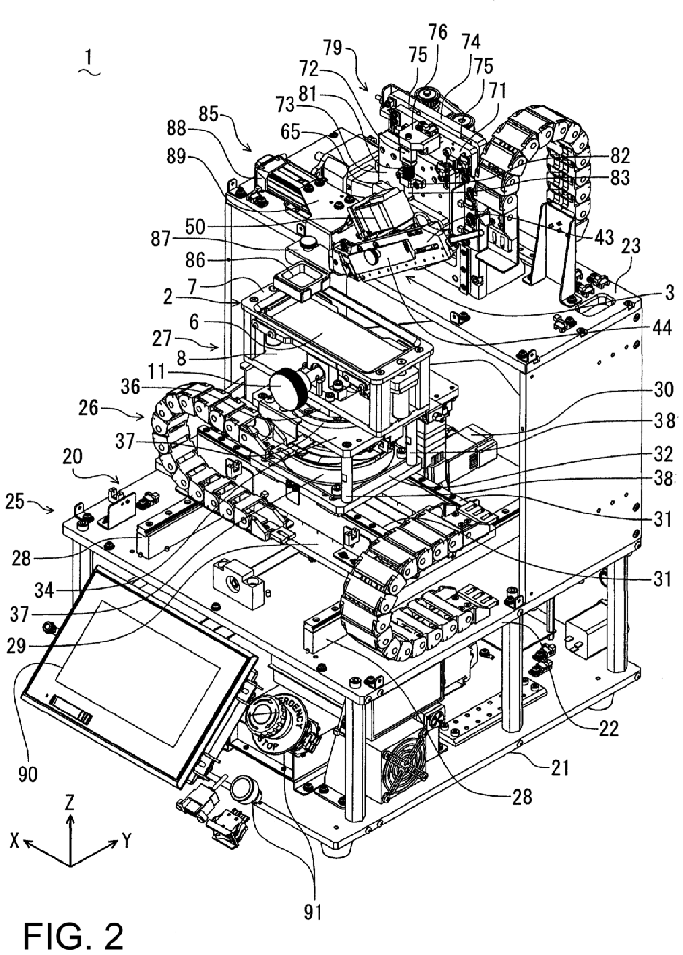

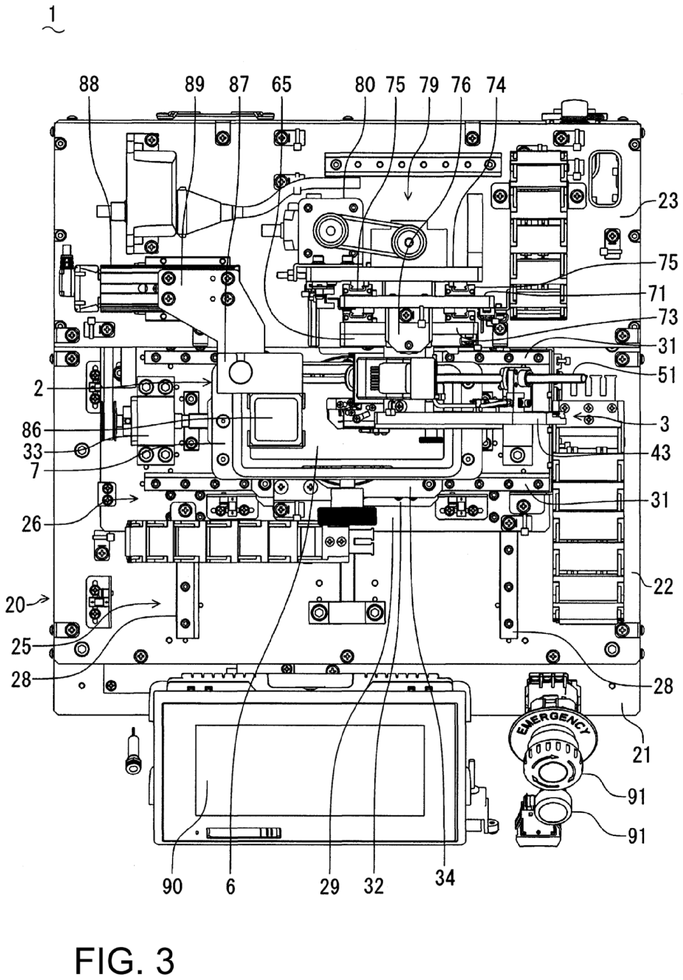

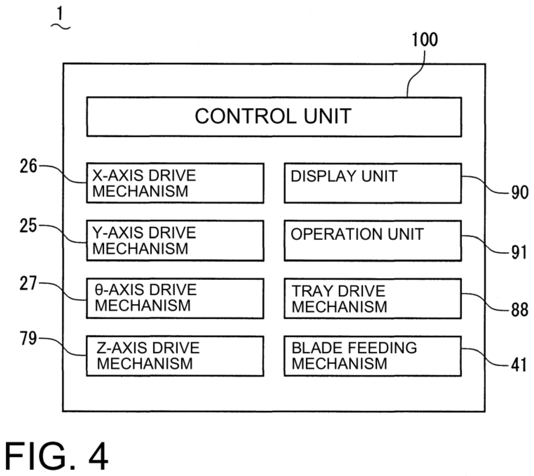

Fig. 1 shows an example of an external configuration of a coating film cutting apparatus 1 according to the present invention, and Figs. 2 and 3 show an internal structure of the coating film cutting apparatus 1 from which a casing 4 is removed. Fig. 4 is a block diagram showing various drive mechanisms, a control unit thereof, and the like of the coating film cutting apparatus 1.

The coating film cutting apparatus 1 is an apparatus for performing predetermined cutting processing or scratching processing on a test piece TP having a coating film formed on a surface thereof, and includes, as main parts, a test piece holder 2 for holding the test piece TP, and a cutter unit 3 for holding a tool (cutter knife blade) for performing predetermined cutting processing on the test piece TP.

Here, the test piece TP is a plate-like or film-like sample obtained by forming a coating film for evaluating mechanical properties on a base material made of metal, resin, or the like. In the present embodiment, for example, the test piece TP whose base material is a metal plate is used.

As shown in Fig. 1, the coating film cutting apparatus 1 is accommodated in the casing 4. The casing 4 includes a main body casing 4a that covers almost the entire apparatus except the test piece holder 2 and the cutter unit 3, and an opening and closing lid 4b attached to the main body casing 4a so as to be openable and closable via a hinge 5, and can accommodate the test piece holder 2 and the cutter unit 3 in a closed space by closing the opening and closing lid 4b. Therefore, when the cutting processing is performed on the test piece TP, a cut piece and the like of the coating film can be prevented from scattering to the outside of the apparatus by closing the opening and closing lid 4b. Note that 4c in the drawing illustrates a transparent window provided in the opening and closing lid 4b, and the situation of the cutting processing and the like can be visually recognized from the outside of the apparatus through the transparent window 4c.

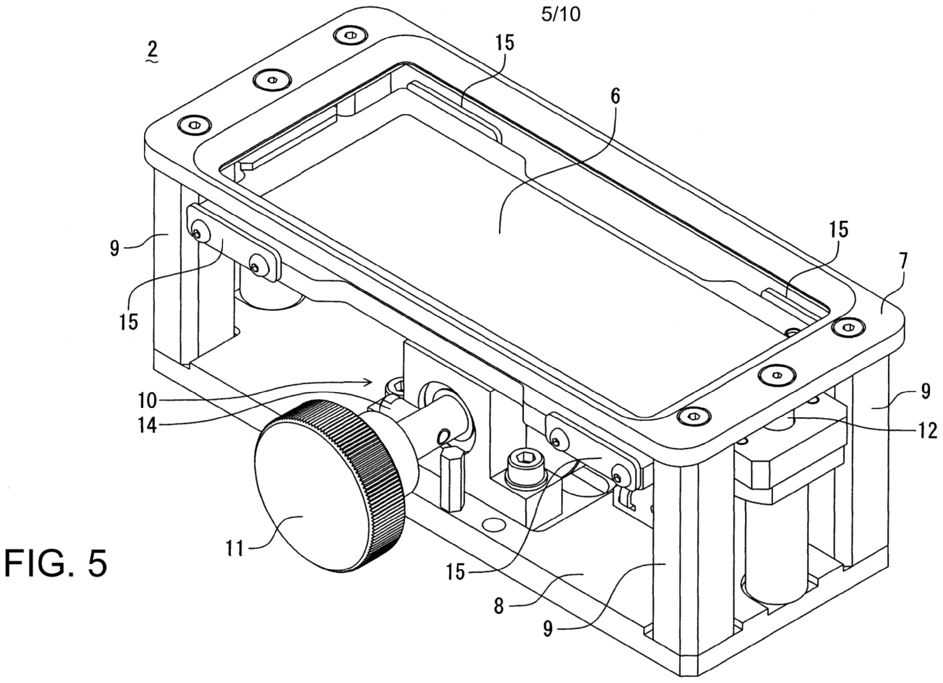

The test piece holder 2 is a holder for fixedly holding the test piece TP, and as shown in Fig. 5, includes, as main parts, a lifting stage 6 capable of moving up and down in the vertical direction (Z-axis direction), and a pressing frame 7 for sandwiching and holding the test piece TP in cooperation with the lifting stage 6.

Specifically, the test holder 2 includes a base plate 8, struts 9 erected on the base plate 8, the pressing frame 7 arranged on the struts 9, the lifting stage 6 arranged below the pressing frame 7, and a lifting mechanism 10 of the lifting stage 6. The base plate 8 is formed of a plate-like member having a substantially rectangular shape, and the struts 9, 9, ... are erected at four corners thereof. The pressing frame 7 is a member that comes into contact with the outer peripheral edge of the test piece TP and sandwiches and holds the test piece TP between the pressing frame 7 and the lifting stage 6 when the lifting stage 6 on which the test piece TP is placed is lifted, and is formed of a frame body whose central portion is opened. Four corners of the pressing frame 7 are attached on the struts 9. Note that in the pressing frame 7, an elastic body (e.g., rubber plate) (not shown) is arranged on a surface (lower surface) facing the lifting stage 6. As a result, the positional deviation of the test piece TP is prevented by friction with the elastic body. In addition, in this type of test piece TP, in order to seal an end portion of the test piece TP, a large amount of paint or the like forming the coating film may be applied to the outer peripheral edge of the test piece TP, so that the coating film may bulge at the outer peripheral edge of the test piece TP. However, even the test piece TP having the outer peripheral edge bulging in this manner can be reliably held by arranging the elastic body in the pressing frame 7.

The lifting stage 6 is formed of a substantially rectangular plate-like member arranged inside the four struts 9, 9, .... The lifting mechanism 10 includes a cam (not shown) that acts on the lower surface of the lifting stage 6, a lifting knob 11 coupled to a rotation shaft of the cam, and a linear shaft 12 and a linear bush 13 that guide the lifting movement of the lifting stage 6. The lifting stage 6 attached to the linear bush 13 is lifted up and down with the rotation of the lifting knob 11. Note that reference numeral 14 in the drawing denotes a rotation stopper that stops rotation of the lifting knob 11. The rotation stopper 14 can stop the lifting stage 6 at a desired height position . In the drawing, reference numeral 15 denotes an abutment plate used for positioning when the test piece TP is set on the lifting stage 6. In the lifting stage 6 shown in Fig. 5, a groove lower than the center is formed in an outer peripheral portion of the stage. The groove is a groove for accommodating the bulged outer peripheral edge of the test piece TP having the bulged outer peripheral edge described above, and the test piece TP can be stably placed on the lifting stage 6 by accommodating the outer peripheral edge in the groove.

In the test piece holder 2 configured as described above, first, the lifting stage 6 is lowered to the setting position of the test piece TP, and the test piece TP is placed on the lifting stage 6 at that position . When the placement is completed, next, the lifting knob 11 is operated to lift the lifting stage 6. By raising the lifting stage 6, the test piece TP is sandwiched between the lifting stage 6 and the pressing frame 7, and the test piece TP is held between the lifting stage 6 and the pressing frame 7. When the holding of the test piece TP is completed, the rotation stopper 14 is finally operated to stop the rotation of the lifting knob 11. As a result, the test piece TP is fixed while being held by the test piece holder 2.

In the coating film cutting apparatus 1 according to the present invention, the test piece holder 2 having such a configuration is provided on an apparatus base 20 of the coating film cutting apparatus 1 so as to be movable in an X-axis direction (left-right direction), a Y-axis direction (front-rear direction) , and a θ-axis direction (circumferential direction) .

Here, the apparatus base 20 of the coating film cutting apparatus 1 will be briefly described.

In the coating film cutting apparatus 1 shown in the present embodiment, the apparatus base 20 is formed of a three-layer structure frame including a bottom plate 21, an intermediate plate 22, and a ceiling plate 23 such that an electric component area for accommodating electric components such as a display unit 90, an operation unit 91, and a power supply unit (not shown) is formed in a lowermost layer, a test piece holder area for accommodating the test piece holder 2 and a drive mechanism thereof is formed in an intermediate layer, and a tool unit area for accommodating the cutter unit 3 and a drive mechanism thereof is formed in an uppermost layer.

The test holder 2 is arranged on the intermediate plate 22, and the intermediate plate 22 includes a Y-axis drive mechanism 25 that moves the test piece holder 2 in the Y-axis direction, an X-axis drive mechanism 26 that moves the test piece holder 2 in the X-axis direction, and a θ-axis drive mechanism 27 that rotates the test piece holder 2 about the θ-axis.

The Y-axis drive mechanism 25 includes a pair of Y-axis rails 28 arranged on the intermediate plate 22 in the Y-axis direction, an XY stage 29 arranged so as to be able to travel on the Y-axis rails 28 in the Y-axis direction, and a Y-axis motor 30 that drives the XY stage 29 in the Y-axis direction. The Y-axis motor 30 is connected to a control unit 100 described later, and can control the position of the XY stage 29 in the Y-axis direction through the control unit 100.

The X-axis drive mechanism 26 includes a pair of X-axis rails 31 arranged in the X-axis direction on the XY stage 29, a first θ-stage 32 arranged so as to be able to travel in the X-axis direction on the X-axis rails 31, and an X-axis motor 33 that drives the first θ-stage 32 in the X-axis direction. The X-axis motor 33 is connected to the control unit 100 described later, and the position of the first θ-stage 32 in the X-axis direction is controlled by the control unit 100. In addition, struts 38 are erected at four corners of the first θ-stage 32, and a second θ-stage 34 is arranged on the struts 38. That is, the θ-stage arranged on the X-axis rails 31 has a two-layer structure including first and second layers.

The θ-axis drive mechanism 27 includes an annular θ-axis rail 35 arranged on the second θ-stage 34, a test piece holder mounting plate 36 arranged on the θ-axis rail 35 so as to be rotatable about the θ-axis, and a θ-axis motor (not shown) that rotationally drives a θ-axis body (not shown) coupled to the test piece holder mounting plate 36. The θ-axis motor is connected to the control unit 100 described later, and a rotation angle of the test piece holder mounting plate 36 is controlled by the control unit 100. The θ-axis body penetrates the second θ-stage 34 and is coupled to an electromagnetic brake 37 arranged on the first θ-stage 32, so that the rotation of the θ-axis body can be stopped by the electromagnetic brake 37. As a result, the rotation of the test piece holder 2 mounted on the test piece holder mounting plate 36 can be fixed, and misalignment of the test piece holder 2 is prevented from occurring during the cutting processing on the test piece TP.

The base plate 8 of the test piece holder 2 is mounted on the test piece holder mounting plate 36 of the θ-axis drive mechanism 27. As a result, the test piece holder 2 is rotationally driven with the rotation of the test piece holder mounting plate 36.

Note that in the present embodiment, since the Y-axis drive mechanism 25, the X-axis drive mechanism 26, and the θ-axis drive mechanism 27 that drive the test piece holder 2 in the Y-axis, X-axis, and θ-axis directions employ a stacked structure in which the height positions in the vertical direction are shifted, drive means of the test piece holder 2 can be arranged in a narrow space (narrow space in plan view). Therefore, the coating film cutting apparatus 1 can be made compact.

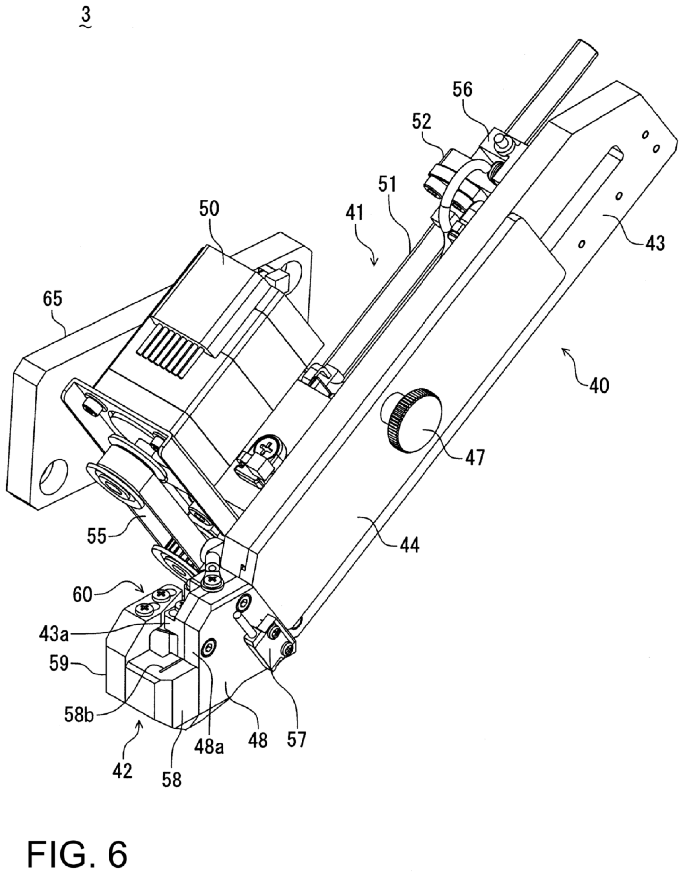

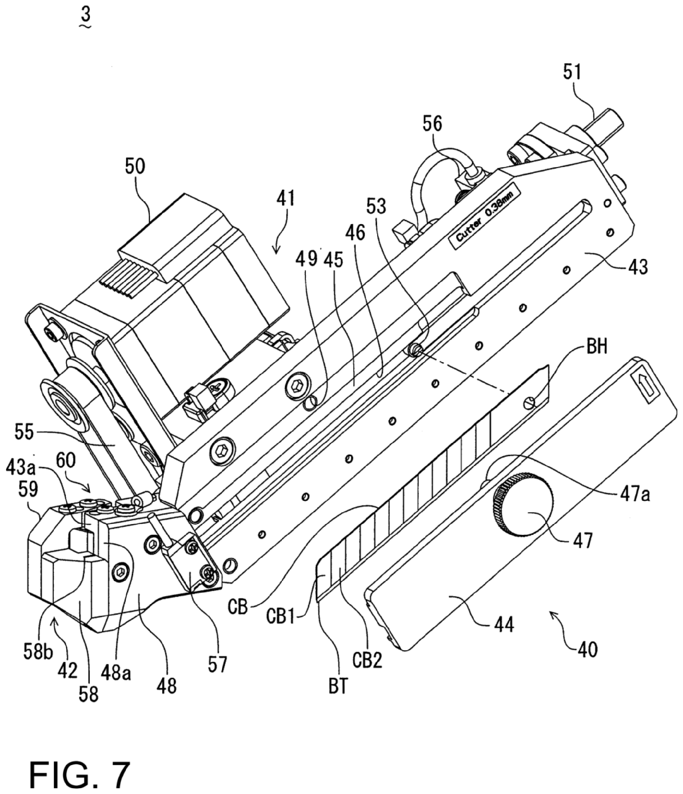

On the other hand, the cutter unit 3 is a unit for performing predetermined cutting processing on the test piece TP held by the test piece holder 2 using the cutter knife blade CB. In the present embodiment, as shown in Figs. 6 and 7, the cutter unit 3 includes, as main parts, a blade holding mechanism 40 that detachably holds the cutter knife blade CB, a blade feeding mechanism 41 that feeds the cutter knife blade CB held by the blade holding mechanism 40 to the blade edge (distal end) side, and a blade snapping mechanism 42 that is provided on the distal end side of the blade feeding mechanism 41 and snaps off a distal end block CB1 of the cutter knife blade CB fed by the blade feeding mechanism 41 along a snap line.

Here, the cutter knife blade CB used in the cutter unit 3 is a cutter knife blade used in a test or the like for evaluating mechanical properties of a coating film, and for example, a cutter knife blade specified as a cutting tool in JIS-K5600-5-6, a cutter knife blade specified as a cutting tool in ISO2409, a cutter knife blade specified in JIS-5400 8.5.1 (2) (a) and JIS-K5400 7.2 (2) (e), or the like is used. In particular, in the present embodiment, as shown in Fig. 7, as the cutter knife blade CB, a blade in which snap lines are formed at regular intervals from the blade edge side, and an engagement hole (through hole) BH to be engaged with a slider of the cutter knife is drilled on the base end side is used. Note that this type of cutter knife blade CB is commercially available as a replacement blade for a general cutter knife, and thus can be obtained inexpensively and easily.

The blade holding mechanism 40 includes a main body frame 43 and a blade pressing cover 44 as main parts. As shown in Figs. 6 and 7, the main body frame 43 is formed of an elongated block body that accommodates the cutter knife blade CB, and a blade fitting groove 45 in which the cutter knife blade CB is fitted is formed along the longitudinal direction on one side surface of the main body frame 43. An elongated slide through hole 46 extending in the longitudinal direction is formed in a bottom portion of the blade fitting groove 45, and a joint pin 53 of the blade feeding mechanism 41 described later is exposed from the slide through hole 46.

The joint pin 53 is a pin that engages with the engagement hole BH of the cutter knife blade CB. When the cutter knife blade CB is fitted into the blade fitting groove 45, the engagement hole BH of the cutter knife blade CB is engaged with the joint pin 53, so that the cutter knife blade CB slides in the longitudinal direction of the main body frame 43 as the joint pin 53 moves along the slide through hole 46. Note that the cutter knife blade CB that slides in the longitudinal direction is fitted in the blade fitting groove 45 to suppress deviation in the vertical direction.

The blade pressing cover 44 is a cover that covers the cutter knife blade CB fitted into the blade fitting groove 45, and the blade pressing cover 44 prevents the cutter knife blade CB accommodated in the blade fitting groove 45 frombeing lifted. The blade pressing cover 44 is provided with a knurled knob 47 having a bolt shaft 47a, andthebladepressingcover44 is attached to the main body frame 43 by screwing the bolt shaft 47a of the knurled knob 47 into a screw hole 49 on the main body frame 43 side. Note that the cutter knife blade CB accommodated in the main body frame 43 is replaced by lifting the blade pressing cover 44.

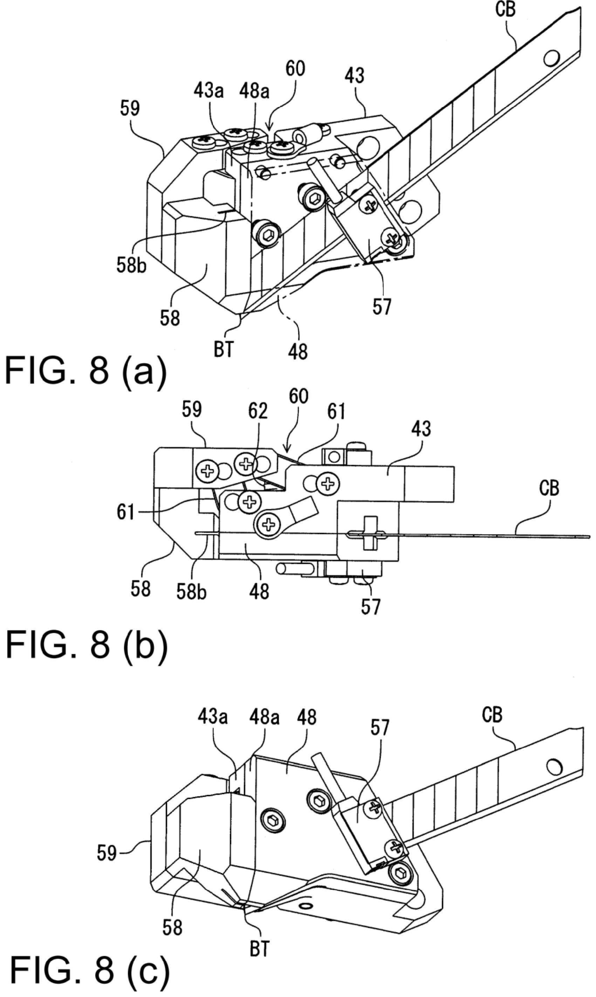

The blade edge guide block 48 that guides the blade edge of the cutter knife blade CB is provided on the distal end side of the main body frame 43. As illustrated in Figs. 8(a) and 8 (b), the blade edge guide block 48 is arranged so as to sandwich the cutter knife blade CB with the main body frame 43 with a slight gap (e.g., gap of about 0.1 mm) left, and the blade edge guide block 48 guides the blade edge of the cutter knife blade CB so as not to swing laterally.

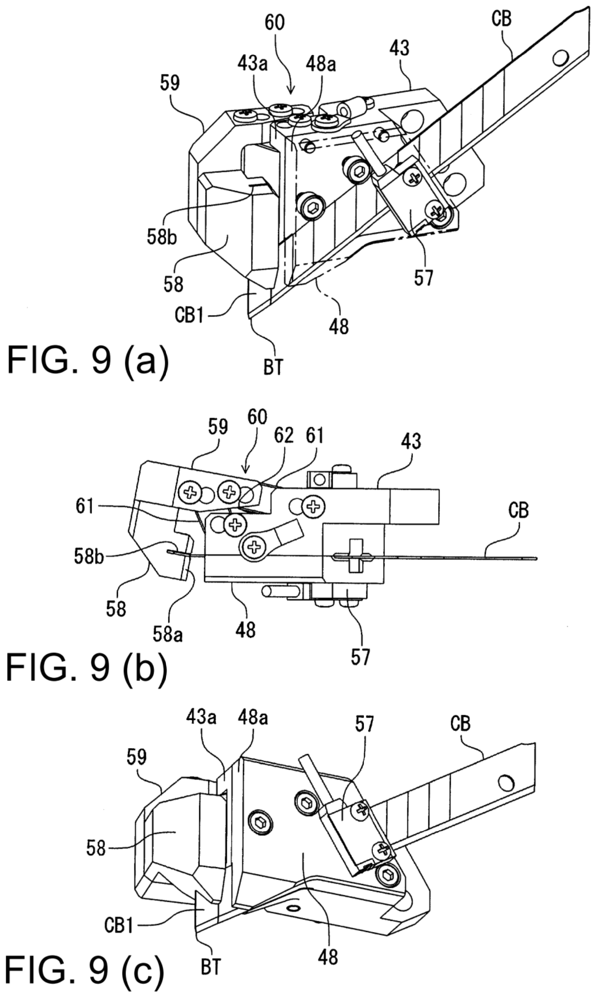

The distal ends of the main body frame 43 and the blade edge guide block 48 protrude downward such that a blade edge BT of the cutter knife blade CB is slightly exposed (e.g., about 2 mm of cutting edge is exposed) from between the main body frame 43 and the blade edge guide block 48 (see Fig. 8(c)). As a result, only the blade edge BT portion of the cutter knife blade CB used for cutting into the coating film is exposed to the outside, and portions other than the blade edge BT are made less likely to snap during the cutting processing on the coating film. Note that a distal end surface 43a of the main body frame 43 and a distal end surface 48a of the blade edge guide block 48 are formed to be substantially flush with each other, and this surface and a facing surface 58a (see Fig. 9(b)) of a blade snapping block 58 described later face each other.

The blade feeding mechanism 41 is a mechanism unit that moves (slides) the cutter knife blade CB held by the blade holding mechanism 40 forward and backward along the longitudinal direction of the main body frame 43, and includes a stepping motor (electric motor) 50, a ball screw 51 drivingly coupled to the stepping motor 50, and a slide member (not shown) coupled to a nut portion 52 of the ball screw 51. The slide member is provided with the joint pin (locking portion) 53 that engages with the engagement hole BH of the cutter knife blade CB.

Specifically, the stepping motor 50 is drivingly coupled to one end of the ball screw 51 via a transmission belt 55. The ball screw 51 is arranged in the longitudinal direction of the main body frame 43 along the slide through hole 46, and is configured such that the nut portion 52 of the ball screw 51 slides in conjunction with the rotation of the stepping motor 50.

A slide member is coupled to the nut portion 52, and the joint pin 53 provided in the slide member is exposed to the opposite side of the main body frame 43 through the slide through hole 46. As a result, the joint pin 53 slides in the longitudinal direction of the main body frame 43 in conjunction with the sliding movement of the nut portion 52.

The stepping motor 50 that drives the ball screw 51 is connected to the control unit 100, and the position of the joint pin 50 in the longitudinal direction is controlled by the control unit 100. That is, feeding of the cutter knife blade CB is controlled by the control unit 100. Note that in the present embodiment, feeding of the blade CB can be controlled by the control unit 100 in units of 1 µm at the minimum.

In the drawing, reference numeral 56 denotes an origin sensor that detects an origin position of the slide member. The origin sensor 56 includes a photointerrupter that detects the position of the slide member, and is arranged at a predetermined position on the proximal end side of the main body frame 43. The control unit 100 is configured to once return the slide member to a position detected by the origin sensor 56 when the power of the stepping motor 50 is turned on, so that the origin at the time of the blade feed control is set.

Furthermore, in the drawing, reference numeral 57 denotes a blade edge detection sensor 57 that detects the blade edge of the cutter knife blade CB. The blade edge detection sensor 57 includes a photoelectric sensor arranged on the blade edge guide block 48. The control unit 100 causes the blade edge detection sensor 57 to detect the blade edge position of the cutter knife blade CB slid by the blade feeding mechanism 41 and the presence or absence of the cutter knife blade CB.

The blade snapping mechanism 42 is a mechanism unit that snaps and removes the distal end block CB1 of the cutter knife blade CB fed by the blade feeding mechanism 41, and includes the blade snapping block 58 that snaps off the distal end block CB1 along the snap line by sandwiching the distal end block CB1 of the cutter knife blade CB fed by the blade feeding mechanism 41 and turning in conjunction with feeding of the cutter knife blade CB.

Specifically, the blade snapping mechanism 42 includes the blade snapping block 58 and a turning arm 59 that turns the blade snapping block 58 as main parts.

The blade snapping block 58 has a facing surface 58a facing each of the distal end surfaces 43a and 48a of the main body frame 43 and the blade edge guide block 48, and a slit-shaped blade edge introduction hole 58b into which the distal end block CB1 of the cutter knife blade CB can be inserted is formed in the facing surface 58a. When the facing surface 58a of the blade snapping block 58 and the distal end surfaces 43a and 48a of the main body frame 43 and the blade edge guide block 48 are in the facing state, the blade edge introduction hole 58b is formed so as to be positioned on an extension line of the cutter knife blade CB held by the main body frame 43, and the blade edge (distal end block CB1) of the cutter knife blade CB fed by the blade feeding mechanism 41 is introduced into the blade edge introduction hole 58b along with the blade feeding. The depth of the blade edge introduction hole 58b is set according to the width of the fold line of the cutter knife blade CB, and in the present embodiment, the depth is set to a depth corresponding to the depth of one snap line (width dimension of distal end block CB1) (see Fig. 9(c)).

The turning arm 59 is provided with the blade snapping block 58 at its distal end, and its proximal end is coupled to the distal end of the main body frame 43 via a link mechanism 60. The link mechanism 60 forms a four-node link mechanism including the main body frame 43, the turning arm 59, and a pair of coupling members 61 and 61 coupling them, and a return spring 62 that returns the turned blade snapping block 58 to an initial position is provided inside the link mechanism 60 (see Fig. 8(b)) .

As a result, when the cutter knife blade CB is fed forward beyond the distal end surfaces 43a and 48a of the main body frame 43 and the blade edge guide block 48 by the blade feeding mechanism 41, the blade edge of the cutter knife blade CB beyond the distal end surfaces 43a and 48a is introduced into the blade edge introduction hole 58b of the blade snapping block 58. Then, when the cutter knife blade CB is further fed, the blade snapping block 58 is pushed out by the cutter knife blade CB, and accordingly, the turning arm 59 coupled to the main body frame 43 via the link mechanism 60 starts turning, whereby the blade snapping block 58 attached to the turning arm 59 is inclined so as to bend the cutter knife blade CB (bending angle is generated), and as a result, the distal end block CB1 of the cutter knife blade CB is snapped off (blade snapping operation (see Figs. 9(a) and 9(b))).

At this time, since the blade edge introduction hole 58b is set to a depth corresponding to one snap line of the cutter knife blade CB, only the distal end block CB1 is snapped off as shown in Fig. 9(c). At this time, since the second snap line from the blade edge is sandwiched and protected by the main body frame 43 and the blade edge guide block 48, the cutter knife blade CB is not snapped at the position of the second snap line. In addition, since the blade snapping mechanism 42 performs the blade snapping operation using the actuator (stepping motor 50) of the blade feeding mechanism 41, the blade snapping mechanism 42 can be implemented with a simple structure, and the blade snapping mechanism 42 can be provided at low cost.

Note that as a result of an experiment conducted by the applicant regarding the bending angle of the blade snapping block 58 required for the snapping of the distal end block CB1, it has been found that a bending angle of at least 7° or more is required to snap the distal end block CB1. Therefore, in the blade snapping mechanism 42 shown in the present embodiment, the blade snapping block 58 is inclined up to a maximum of 15° (maximum bending angle is 15°).

Then, the cutter unit 3 configured as described above includes, on one side surface opposite to the blade pressing cover 44, an attachment plate 65 for supporting the cutter unit 3 so as to be movable in the Z-axis direction (vertical direction) , and the cutter unit 3 is detachably attached to a second stage 73 described later via the attachment plate 65. Note that in this attachment, by moving the cutter unit 3 in the Z-axis direction, the cutter unit 3 is attached so that the cutter knife blade CB can cut the test piece TP held by the test piece holder 2 correctly (with correct blade angle and correct cutting angle) .

Next, a structure for moving the cutter unit 3 in the Z-axis direction will be described.

In the coating film cutting apparatus 1 shown in the present embodiment, the cutter unit 3 is attached to the second stage 73 suspended from a first stage 71 provided movably in the Z-axis direction via a load cell 72 on the apparatus base 20.

As shown in Figs. 2 and 3, the first stage 71 is attached to a Z-axis base plate 74 provided upright on the ceiling plate 23. A pair of Z-axis rails 75 are arranged on the Z-axis base plate 74 in the Z-axis direction, and the first stage 71 is slidably attached to the Z-axis rails 75.

The first stage 71 includes a Z-axis drive mechanism 79 that drives the first stage 71 in the Z-axis direction. The Z-axis drive mechanism 79 includes the Z-axis rails 75 and a Z-axis motor 80 that drives the first stage 71 in the Z-axis direction. The first stage 71 is drivingly coupled to the Z-axis motor 80, so that the first stage 71 is driven in the Z-axis direction. Note that the Z-axis motor 80 is connected to the control unit 100 described later, and can control the position of the first stage 71 and the cutter unit 3 in the Z-axis direction through the control unit 100.

The load cell 72 is a sensor that measures a load applied to the cutter unit 3, and has one end coupled to a sensor attachment plate 76 attached to the first stage 71 and the other end coupled to the second stage 73. As a result, the second stage 73 is suspended from the first stage 71 via the load cell 72.

In the suspension, for example, a rod (not shown) having a flange formed at the distal end is arranged at the other end of the load cell 72, a load cell protecting spring 81, a coupling block 82, and a metal collar 83 are arranged on the rod, and the coupling block 82 loosely fitted to the rod is fixed to the second stage 73. The load cell protecting spring 81 is compressed and inserted between the load cell 72 and the coupling block 82, and functions to protect the load cell 72 by preventing damage to the load cell 72 in a case where an excessive force (displacement) is applied to the cutter unit 3, for example.

When the cutter unit 3 is attached to the second stage 73 suspended in this manner, the load cell 72 is pulled by the weight of the cutter unit 3, and the second stage 73 is lowered. Here, assuming that the weight of the cutter unit 3 is 1 kg and the deflection amount of the load cell 72 per 1 kg is 4 µm, when the first stage 71 is lowered in this state and the blade edge BT of the cutter knife held by the cutter unit 3 is brought into contact with the test piece TP, the deflection of the load cell 72 which had been in a tensile state of 4 µm before the contact is gradually returned. In a case where the return amount at this time is 4 µm or less, a load having a weight of 1 kg or less is applied. When the first stage 71 is further lowered and the deflection in the compression direction is applied to the load cell 72, a load equal to or more than its own weight is applied. These loads are set by the thrust of the Z-axis motor 80 of the Z-axis drive mechanism 79.

Note that the load cell 72 is connected to the control unit 100, and the control unit 100 can measure the load applied to the cutter unit 3.

The second stage 73 is a portion to which a tool unit such as the cutter unit 3 is attached, and is formed of a substantially plate-like member. In the present embodiment, the second stage 73 is attached to a pair of guide rails 78 and 78 arranged on the surface of the first stage 71 in the Z-axis direction, and is slidable in the Z-axis direction along the guide rails 78 and 78.

As described above, in the coating film cutting apparatus 1 shown in the present embodiment, by moving the first stage 71 in the Z-axis direction, the cutter unit 3 attached to the second stage 73 can be moved in the Z-axis direction, so that the predetermined cutting processing can be performed on the test piece TP held by the test piece holder 2 using the cutter knife blade CB held by the cutter unit 3.

Next, a snap blade collection mechanism 85 will be described.

The snap blade collection mechanism 85 is a mechanism unit that collects blade pieces BP snapped off by the blade snapping mechanism 42, and includes, as main parts, a blade piece collection tray 86, a bracket 87 that attaches the blade piece collection tray 86 to a slider 89, and a tray drive mechanism 88 that drives the slider 89 in the X-axis direction.

The blade piece collection tray 86 is a receiving tray that is arranged immediately below (at blade piece collection position below) the blade snapping block 58 and accommodates the blade pieces BP falling from the blade snapping block 58 when the blade snapping mechanism 42 snaps off the distal end block CB1 of the cutter knife blade CB, and in the present embodiment, is in the form of a tray having a substantially rectangular shape with an open upper portion.

The tray drive mechanism 88 is a drive mechanism that moves the blade piece collection tray 86 between a predetermined standby position and a blade piece collection position. In the present embodiment, the tray drive mechanism 88 is formed of an electric actuator that moves the slider 89 between two points of the standby position and the blade piece collection position. The illustrated tray drive mechanism 88 is arranged on the ceiling plate 23, and the bracket 87 to which the blade piece collection tray 86 is attached is attached to the slider 89 moving between two points.

In this manner, by configuring the blade piece collection tray 86 to be detachably attached via the bracket 87, for example, it is possible to replace the blade piece collection tray 86 with that having a size corresponding to the size of the blade piece BP, or to replace the blade piece collection tray 86 with that having a different property (e.g., magnetic/non-magnetic) . Note that the electric actuator is connected to the control unit 100 so that the control unit can control the position of the blade piece collection tray 86.

The control unit 100 is a control device that controls the Y-axis drive mechanism 25 (Y-axis motor 30), the X-axis drive mechanism 26 (X-axis motor 33), the θ-axis drive mechanism 27 (θ-axis motor), the Z-axis drive mechanism 79 (Z-axis motor 80) , the blade feeding mechanism 41 (stepping motor 50), the tray drive mechanism 88, and the like. In the present embodiment, the control unit 100 is formed of a microcomputer (not shown) provided with a control program for performing drive control of each drive mechanism, display control of the display unit 90, and the like, and is accommodated in the electric component area of the apparatus base 20. In particular, in the present embodiment, the control unit 100 is configured to perform cutting processing on a coating film, blade folding blade feeding processing, and the like, which will be described later, through drive control of these drive mechanisms.

Note that in the drawing, reference numeral 90 denotes a display unit of the coating film cutting apparatus 1. In the present embodiment, the display unit 90 includes, for example, a touch panel that also serves as the operation unit 91. In addition, in the drawing, reference numeral 91 denotes an operation unit formed of a physical switch other than the touch panel. The user of the coating film cutting apparatus 1 can input various instructions to the control unit 100 by operating a physical switch or a touch panel while checking the display on the display unit 90.

Next, cutting processing on the coating film of the test piece TP by the coating film cutting apparatus 1 will be described.

The cutting processing on the coating film is performed by the following procedure.

### (1) Attachment of test piece TP to test piece holder 2

In the cutting processing of the coating film, as a preliminary preparation, the test piece TP having the coating film formed on its surface is attached to the test piece holder 2. As described above, this attachment is performed by sandwiching and holding the test piece TP between the lifting stage 6 and the pressing frame 7, and operating the rotation stopper 14 in this state to fix the test piece TP to the test piece holder 2.

### (2) Attachment of cutter knife blade CB to cutter unit 3

In parallel with the attachment of the test piece TP to the test piece holder 2, the cutter knife blade CB is attached to the cutter unit 3. This attachment is performed by loosening the blade pressing cover 44 provided in the main body frame 43 of the cutter unit 3. Specifically, the cutter knife blade CB is fitted into the blade fitting groove 45 of the main body frame 43, the engagement hole BH of the cutter knife blade CB is engaged with the joint pin 53 exposed from the slide through hole 46, and the blade pressing cover 44 is finally reattached, whereby the attachment of the cutter knife blade CB is completed.

### (3) Blade feeding processing

When the attachment of the cutter knife blade CB is completed, next, the control unit 100 performs the blade feeding processing of the cutter knife blade CB so that the blade edge BT of the cutter knife blade CB is arranged at a predetermined position while detecting the position of the blade edge BT. In the coating film cutting apparatus 1 shown in the present embodiment, when the power is turned on, the control unit 100 controls the stepping motor 50 to retract the cutter knife blade CB and detect the origin position. When the detection of the origin position is completed, the control unit 100 then controls the stepping motor 50 to advance the cutter knife blade CB. At this time, the control unit 100 detects the blade edge BT of the cutter knife blade CB by the blade edge detection sensor 57 provided in the blade edge guide block 48, and advances the cutter knife blade CB to a position where the blade edge BT of the cutter knife blade CB slightly protrudes from the distal end of the blade edge guide block 48, that is, a position where only the blade edge BT portion used for the cutting processing is exposed to the outside from the blade edge guide block 48 based on the detection result, and arranges the cutter knife blade CB at a predetermined cutting position (blade feeding processing).

### (4) Cutting processing

When the cutter knife blade CB is arranged at a predetermined cutting position, next, cutting processing is performed on the test piece TP. Although this processing may be manually performed by operating the operation unit 91, in the present embodiment, data for the cutting processing is input to the control unit 100, and the control unit 100 drives and controls the Y-axis drive mechanism 25, the X-axis drive mechanism 26, the θ-axis drive mechanism 27, and the Z-axis drive mechanism 79 on the basis of the data, so that the cutting processing is automatically performed.

Specifically, the control unit 100 controls the Y-axis drive mechanism 25, the X-axis drive mechanism 26, and the θ-axis drive mechanism 27 to arrange the test piece TP held by the test piece holder 2 at a predetermined cutting start position. The cutting start position is, for example, a position where the start point of the cutting processing is arranged immediately below the cutter unit 3, that is, immediately below the blade edge BT of the cutter knife blade CB. Thus, the cutting processing can be started by moving the cutter unit 3 in the Z-axis direction.

When the test piece holder 2 is arranged at a predetermined cutting start position, next, the control unit 100 drives and controls the Z-axis drive mechanism 79 to lower the cutter unit 3, and starts the cutting processing on the test piece TP held by the test piece holder 2. At this time, the control unit 100 can cut the test piece TP with a desired load set in advance by measuring the load applied to the test piece TP by the load cell 72.

When the cutting processing on the test piece TP is started in this way, the control unit 100 drives and controls the Y-axis drive mechanism 25, the X-axis drive mechanism 26, the θ-axis drive mechanism 27, and the Z-axis drive mechanism 79 to perform desired cutting processing on the test piece TP. For example, by performing cutting in the longitudinal direction of the test piece TP under the control of the X-axis drive mechanism 26, or once raising the cutter unit 3 by the Z-axis drive mechanism and performing cutting processing again by shifting the position of the test piece holder 2 in the Y-axis direction by the Y-axis drive mechanism 25, it is possible to perform cutting in parallel with the previous cutting. In addition, by driving the θ-axis drive mechanism 27 to rotate the test piece holder 2, it is possible to perform, for example, intersecting cutting processing at a 90-degree angle.

As described above, according to the coating film cutting apparatus 1 of the present invention, it is possible to perform the cutting processing on the coating film while measuring the load acting on the test piece TP (coating film), and thus, it is possible to perform uniform cutting with high reproducibility and stability on the coating film. Therefore, by using the coating film cutting apparatus 1 according to the present invention, a test for evaluating the mechanical properties of a coating film can be accurately performed without variation.

### (5) Blade snapping processing

In addition, since the coating film cutting apparatus 1 according to the present invention includes the blade snapping mechanism 42, the control unit 100 performs the following blade snapping processing at a predetermined timing.

In the case of performing the blade snapping processing, the control unit 100 drives and controls the Z-axis drive mechanism 79 to raise the cutter unit 3 from the cutting position to a predetermined retraction position. In parallel with the raising of the cutter unit 3, the control unit 100 drives and controls the tray drive mechanism 88 to move the blade piece collection tray 86 from the standby position to the blade piece collection position.

When the retraction of the cutter unit 3 and the movement of the blade piece collection tray 86 to the blade piece collection position are completed, the control unit 100 uses the blade feeding mechanism 41 to feed and advance the cutter knife blade CB held by the blade holding mechanism 40 by a predetermined amount. As a result, the distal end block CB1 of the cutter knife blade CB is introduced into the blade edge introduction hole 58b of the blade snapping block 58, and further advancement causes the blade snapping block 58 pushed out by the cutter knife blade CB to turn, thereby snapping off the distal end block CB1 of the cutter knife blade CB (see Figs. 9(b) and 9(c)).

The snapped off distal end block CB1 falls from the blade snapping block 58 as the blade piece BP, and is accommodated and collected in the blade piece collection tray 86 arranged at the blade piece collection position. After waiting for the timing of collecting the blade pieces BP, the control unit 100 returns the blade piece collection tray 86 to the initial standby position.

As described above, in the coating film cutting apparatus 1 according to the present embodiment, the control unit 100 snaps off the distal end block CB1 of the cutter knife blade CB using the blade feeding mechanism 41, and thus, for example, in a case of making a plurality of cuts in the test piece TP, by performing the blade snapping processing before the start of each cutting, it is possible to eliminate variations in cutting due to deterioration of the blade edge BT of the cutter knife blade CB, and to uniformly perform the plurality of cuts.

### Second Embodiment

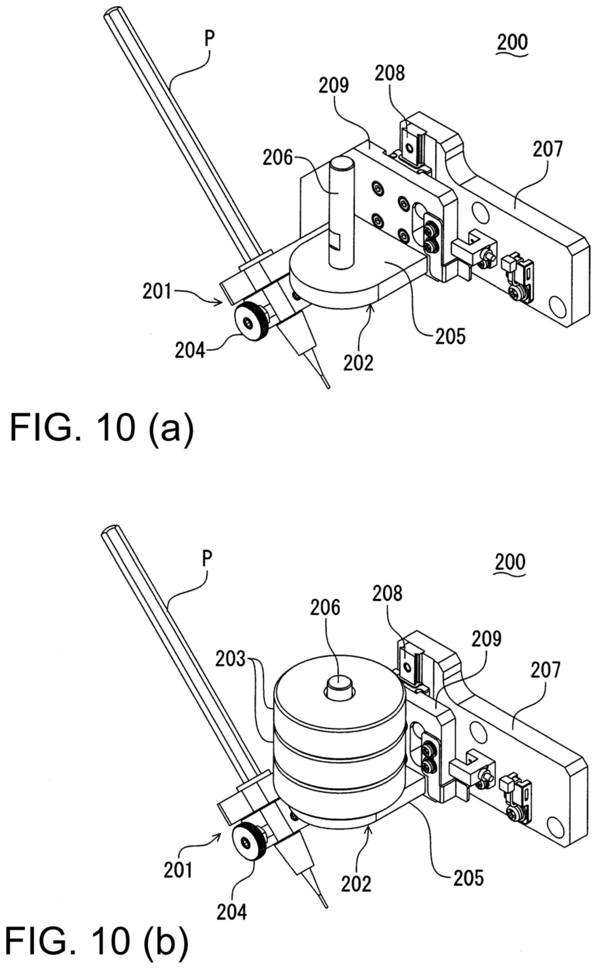

Next, a second embodiment of the present invention will be described with reference to Fig. 10.

The coating film cutting apparatus 1 shown in the second embodiment shows a case where the coating film cutting apparatus 1 shown in the first embodiment includes a scratch unit 200 that performs predetermined scratching processing on a test piece TP as a replacement unit of the cutter unit 3. Since other configurations are the same as those of the coating film cutting apparatus 1 shown in the first embodiment, the same reference numerals are given to the common configurations, and the description thereof will be omitted.

The scratch unit 200 is a unit for holding a needle-shaped tool or a pencil P for performing scratching processing on the test piece TP, and includes a tool holding mechanism 201 for holding the needle-shaped tool or the pencil P and a weight attachment mechanism 202 for attaching a weight 203 for applying a load to the tool holding mechanism 201.

The tool holding mechanism 201 is a mechanism unit that detachably holds the needle-shaped tool or the pencil P, and in the present embodiment, is in the form of a tool holder that holds the needle-shaped tool such as a scribing needle or the pencil P in a clamping manner, and holds the needle-shaped tool or the pencil P with a predetermined angle. Note that in the drawing, reference numeral 204 denotes an operation knob for performing a clamping/releasing operation of the tool holder.

The weight attachment mechanism 202 is a mechanism unit for attaching the weight 203 for applying a load to the tool holding mechanism 201, that is, the needle-shaped tool or the pencil P held by the tool holding mechanism 201, and includes, as main parts, a weight placement base 205 coupled to the weight attachment mechanism 202 and a weight guide strut 206 provided upright on the weight placement base 205. As illustrated in Fig. 10(b), the weight guide strut 206 is a strut to which annular weights 203 and 203 are attached, and as shown in the drawing, the load is adjusted by increasing or decreasing the number of weights 203 attached (stacked) to the weight guide strut 206.

Then, the tool holding mechanism 201 and the weight attachment mechanism 202 configured as described above are attached to an attachment plate 207 for detachably attaching them to a second stage 73 so as to be slidable in the Z-axis direction. Specifically, the attachment plate 207 is provided with a tool Z-axis rail 208 extending in the Z-axis direction, and a tool base plate 209 to which the tool holding mechanism 201 and the weight attachment mechanism 202 are attached is slidably attached to the tool Z-axis rail 208. As a result, the tool holding mechanism 201 and the weight attachment mechanism 202 are attached to the attachment plate 207 attached to the second stage 73 so as to be slidable in the Z-axis direction.

As described above, in the coating film cutting apparatus 1 in which the scratch unit 200 is attached to the second stage 73, similarly to the coating film cutting apparatus 1 shown in the first embodiment described above, a test piece holder 2 can be moved in any direction in the X-axis, Y-axis, and θ-axis directions under the control of a control unit 100, and the scratch unit 200 can be moved in the Z-axis direction. Therefore, for example, "scratch hardness (pencil method)" of the JIS K5600 coating material general test method can be performed. Specifically, for example, first, under the control of the control unit 100, the scratch unit 200 is lowered to bring the distal end of the pencil P into contact with the test piece TP. Thereafter, a first stage 71 is further lowered by a predetermined distance (e.g., 10 mm) and stopped. At this time, since the second stage 73 is slidably attached to the first stage 71, the tool holding mechanism 201 and the weight attachment mechanism 202 come into contact with the test piece TP with a load due to the weights of both components (their own weights). Then, when a load is further applied from this state, the necessary number of weights 203 and 203 are attached to the weight guide strut 206. As described above, according to the coating film cutting apparatus 1 of the present embodiment, a desired load can be applied to the scratch unit 200, and the scratching processing can be performed on the test piece TP while keeping the load constant.

Note that the above-described embodiments merely illustrate preferred embodiments of the present invention, and the present invention is not limited thereto, and various design changes can be made within the scope of the present invention.

For example, in the above-described embodiment, the case where the lifting stage 6 of the test piece holder 2 is lifted and lowered by manual operation has been described. However, it is also possible to perform the lifting and lowering movement of the lifting stage 6 electrically by arranging an electromagnetic motor in the test piece holder 2, for example.

In the above-described embodiment, the case where the scratch unit 200 is used as the replacement unit of the cutter unit 3 has been described. However, since the coating film cutting apparatus 1 according to the present invention has a structure in which the test piece holder 2 is moved in the X-axis, Y-axis, and θ-axis directions, and the tool unit side such as the cutter unit 3 is moved in the Z-axis direction, a unit other than the scratch unit 200 may be replaced or provided alone as long as it is a unit that performs a desired action on the test piece TP using such a structure.

In the above-described embodiment, when the second stage 73 is suspended from the first stage 71 via the load cell 72, the rod is arranged at the other end of the load cell 72, and the load cell protecting spring 81, the coupling block 82, and the metal collar 83 are arranged on the rod. However, as long as the second stage is suspended from the first stage 71 via the load cell 72, the second stage 73 can be suspended by another structure, such as a simpler structure including a coupling block attached to the second stage 73 and a spring supporting the weight of the second stage 73.

In the above-described embodiment, the case where the control unit 100 performs the drive control of the Z-axis drive mechanism 79 while measuring the load in the Z-axis direction by the load cell 72 has been described. However, for example, it is also possible to allow the user to arbitrarily set the cutting depth by the cutter knife blade CB by a control program of the control unit 100 regardless of the load. For example, it is also possible to set the cutting depth in units of 1 µm.

In addition, for example, in the coating film cutting apparatus 1 according to the first embodiment described above, a capacitance sensor (not shown) may be attached to the test piece holder 2 and the cutter unit 3, and the control unit 100 may be configured to determine whether or not the cutter knife blade CB has reached the metal base material of the test piece TP based on the detection result of the capacitance sensor. Note that in this case, whether or not the cutter knife blade CB has reached the base material is desirably notified to the outside by displaying on the display unit 90.

### Reference Signs List

- 1: coating film cutting apparatus
- 2: test piece holder
- 3: cutter unit
- 4: casing
- 6: lifting stage
- 7: pressing frame
- 10: lifting mechanism
- 20: apparatus base
- 21: bottom plate
- 22: intermediate plate
- 23: ceiling plate
- 25: X-axis drive mechanism
- 26: Y-axis drive mechanism
- 27: θ-axis drive mechanism
- 29: XY stage
- 32: first θ-stage
- 34: second θ-stage
- 40: blade holding mechanism
- 41: blade feeding mechanism
- 42: blade snapping mechanism
- 43: main body frame
- 44: blade pressing cover
- 45: blade fitting groove
- 46: slide through hole
- 48: blade edge guide block
- 50: stepping motor (electric motor)
- 51: ball screw
- 52: nut portion of ball screw
- 53: joint pin (locking portion)
- 58: blade snapping block
- 71: first stage
- 72: load cell
- 73: second stage
- 79: Z-axis drive mechanism
- 85: snap blade collection mechanism
- 86: blade piece collection tray
- 88: tray drive mechanism
- 90: display unit
- 91: operation unit
- 100: control unit
- 200: scratch unit
- 201: tool holding mechanism
- 202: weight attachment mechanism
- TP: test piece TP
- CB: cutter knife blade
- BH: engagement hole (through hole) BH
- BT: blade edge
- BP: blade piece

## Claims

1. A coating film cutting apparatus that performs predetermined cutting processing or scratching processing on a test piece having a coating film formed on a surface, the coating film cutting apparatus comprising:
a test piece holder that holds the test piece; and
a tool unit including a tool that performs the predetermined cutting processing or scratching processing on the test piece held by the test piece holder,
wherein the test piece holder is provided movably in an X-axis direction, a Y-axis direction, and a θ-axis direction on an apparatus base, and
wherein the tool unit is detachably attached to a second stage suspended from a first stage provided movably in a Z-axis direction on the apparatus base via a load cell.

2. The coating film cutting apparatus according to claim 1, wherein
the apparatus base includes an X-axis drive mechanism that drives the test piece holder in the X-axis direction, a Y-axis drive mechanism that drives the test piece holder in the Y-axis direction, a θ-axis drive mechanism that drives the test piece holder to rotate about a θ-axis, a Z-axis drive mechanism that drives the first stage in the Z-axis direction, and control means that controls driving of these drive mechanisms.

3. The coating film cutting apparatus according to claim 1 or 2, wherein
the tool unit includes a cutter unit that holds a cutter knife blade for performing the predetermined cutting processing on the test piece.

4. The coating film cutting apparatus according to claim 3, wherein
the cutter unit includes a blade holding mechanism that detachably holds the cutter knife blade, a blade feeding mechanism that feeds the cutter knife blade held by the blade holding mechanism to a blade edge side, and a blade snapping mechanism that is provided on a distal end side of the blade feeding mechanism and snaps a distal end block of the cutter knife blade fed by the blade feeding mechanism along a snap line.

5. The coating film cutting apparatus according to claim 4, wherein
the blade feeding mechanism includes an electric motor, a ball screw drivingly coupled to the electric motor, and a slide member coupled to a nut portion of the ball screw, the slide member including a locking portion that engages with a through hole formed in the cutter knife blade.

6. The coating film cutting apparatus according to claim 4, wherein
the blade snapping mechanism includes a blade snapping block that sandwiches a distal end block of the cutter knife blade fed by the blade feeding mechanism and turns in conjunction with feeding of the cutter knife blade.

7. The coating film cutting apparatus according to claim 1 or 2, wherein
the tool unit includes a scratch unit that holds a needle-shaped tool or a pencil for performing predetermined scratching processing on the test piece.

8. The coating film cutting apparatus according to claim 7, wherein
the scratch unit includes a tool holding mechanism that holds the needle-shaped tool or the pencil, and a weight attachment mechanism that attaches a weight that applies a load to the tool holding mechanism.
